Europäisches Patentamt

European Patent Office

Office européen des brevets

(19)

(11) Veröffentlichungsnummer: **0 047 730**
**B1**

(12) # EUROPÄISCHE PATENTSCHRIFT

(45) Veröffentlichungstag der Patentschrift:
05.12.84

(21) Anmeldenummer: 81890138.1

(22) Anmeldetag: 11.08.81

(51) Int. Cl.³: **B 60 P 1/44**

(54) **Ladevorrichtung für Fahrzeuge.**

(30) Priorität: 05.09.80 AT 4469/80

(43) Veröffentlichungstag der Anmeldung:
17.03.82 Patentblatt 82/11

(45) Bekanntmachung des Hinweises auf die Patenterteilung:
05.12.84 Patentblatt 84/49

(84) Benannte Vertragsstaaten:
DE FR IT NL SE

(56) Entgegenhaltungen:
DE - A - 2 654 285
DE - A - 2 726 355
DE - U - 7 636 780
DE - U - 7 637 445

(73) Patentinhaber: **Kromag AG für Werkzeug- und Metallindustrie, Leobersdorferstrasse 20-24, A-2552 Hirtenberg NÖ (AT)**

(72) Erfinder: **Brosowitsch, Josef, Türkenstrasse 6, A-7083 Purbach (AT)**

(74) Vertreter: **Rippel, Andreas, Dipl.-Ing., Maxingstrasse 34, A-1130 Wien (AT)**

**Beschreibung**

Die Erfindung bezieht sich auf eine Ladevorrichtung für Fahrzeuge mit einer Ladeplattform, die mittels eines von einem hydraulischen Schubmotor bewegbaren Lenkerparallelogrammes zwischen dem Boden und der Ladefläche des Fahrzeuges heb- und senkbar ist, wobei unterhalb der Ladefläche ein mit dem Lenkerparallelogramm verbundener, motorisch um eine quer zur Fahrzeuglängsrichtung angeordnete Achse verschwenkbarer Arm angeordnet ist, der zur Verschwenkung der Ladevorrichtung unter die Ladefläche ausgebildet ist, und wobei der hydraulische Schubmotor einerseits am motorisch verschwenkbaren Arm gelagert ist.

Bei einer in der DE-U-7 637 445 beschriebenen Ladevorrichtung dieser Art ist die eine Strebe des Lenkers über eine Gelenklasche mit dem festen Gestell des Lenkerparallelogrammes verbunden und der drehbare Arm greift an der anderen Strebe an. Der hydraulische Schubmotor ist einerseits an einem mit dem Fahrgestell fest verbundenen Teil, anderseits am drehbaren Arm angelenkt. Die Bewegung der Ladeplattform zwischen dem Boden und der Ladefläche des Fahrzeuges erfolgt daher durch Verschwenkung des Armes, wobei die Gelenklasche eine etwa in Richtung der einen Strebe verlaufende Verlängerung dieser Strebe bildet. Um die Ladevorrichtung unter die Ladefläche verschwenken zu können, wird die Ladeplattform gegenüber dem abgesenkten Lenkerparallelogramm nach oben verschwenkt, wobei nach Überschreiten der oberen Totlage die mit der Gelenklasche verbundene Strebe einknickt und sich die Ladeplattform auf Anschläge der Streben legt. Durch Verschwenken des Armes über den hydraulischen Schubmotor kann die Ladevorrichtung unter die Ladefläche verschwenkt werden, wobei die Ladeplattform in einer schrägen Lage zwischen den Streben des Lenkerparallelogrammes und der Ladefläche zu liegen kommt.

Nachteilig bei der bekannten Ladevorrichtung ist insbesondere der verhältnismässig grosse Platzbedarf für die unter die Ladefläche geschwenkte Vorrichtung.

Diesen Nachteil besitzt auch eine aus der DE-U-7 636 780 bekannte Ladevorrichtung, bei der die Lenkerparallelogramme an einem in Führungsträgern unterhalb des Fahrzeugaufbaues verschiebbaren Schlitten befestigt sind. Während bei der erstgenannten Ladevorrichtung der Platzbedarf in Höhenrichtung gross ist, wird bei dieser bekannten Vorrichtung in Längsrichtung des Fahrzeuges viel Platz benötigt.

Die Erfindung hat es sich zum Ziel gesetzt, eine Ladevorrichtung der eingangs genannten Art derart auszubilden, dass sie in der unterhalb der Ladefläche des Fahrzeuges befindlichen Stellung weniger Platz benötigt als die bekannten Vorrichtungen, wobei sie auf einfache Weise motorisch unter die Ladefläche des Fahrzeuges gebracht werden sollten. Erreicht wird dieses Ziel dadurch, dass der hydraulische Schubmotor anderseits an einem Lenker des Lenkerparallelogramms gelagert ist und zur Verschwenkung des Armes samt dem hydraulischen Schubmotor ein weiterer Motor angeordnet ist.

Bei einer erfindungsgemässen Vorrichtung wird bei der Verschwenkung der Vorrichtung unter die Ladefläche des Fahrzeuges der diese Verschwenkung nicht durchführende hydraulische Schubmotor zum Heben und Senken der Ladeplattform mitverschwenkt, wodurch eine annähernd parallel zur Ladefläche des Fahrzeuges verlaufende Ruhelage der Ladeplattform erreichbar ist. Bei einer solchen Lage wird weniger Platz benötigt als bei einer schrägen Lage entsprechend der erstgenannten bekannten Vorrichtung.

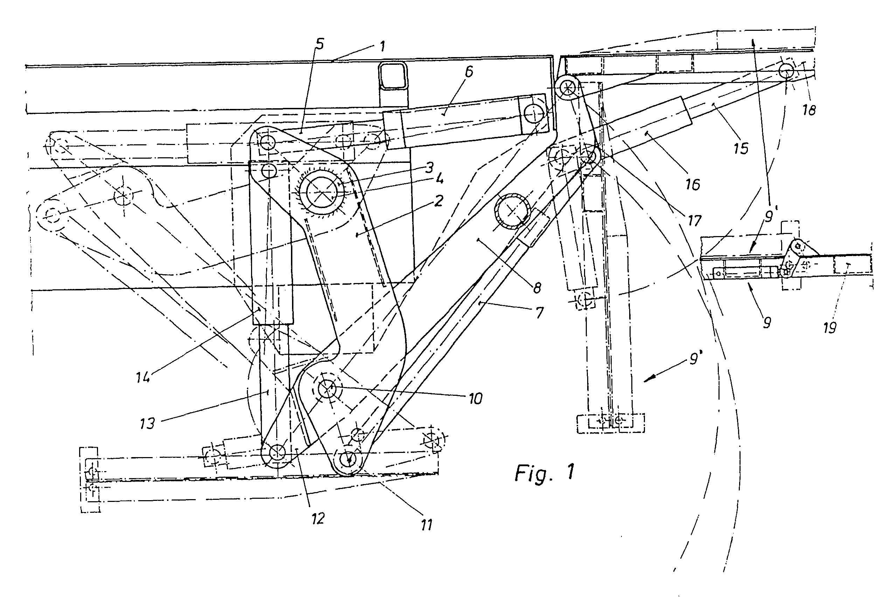

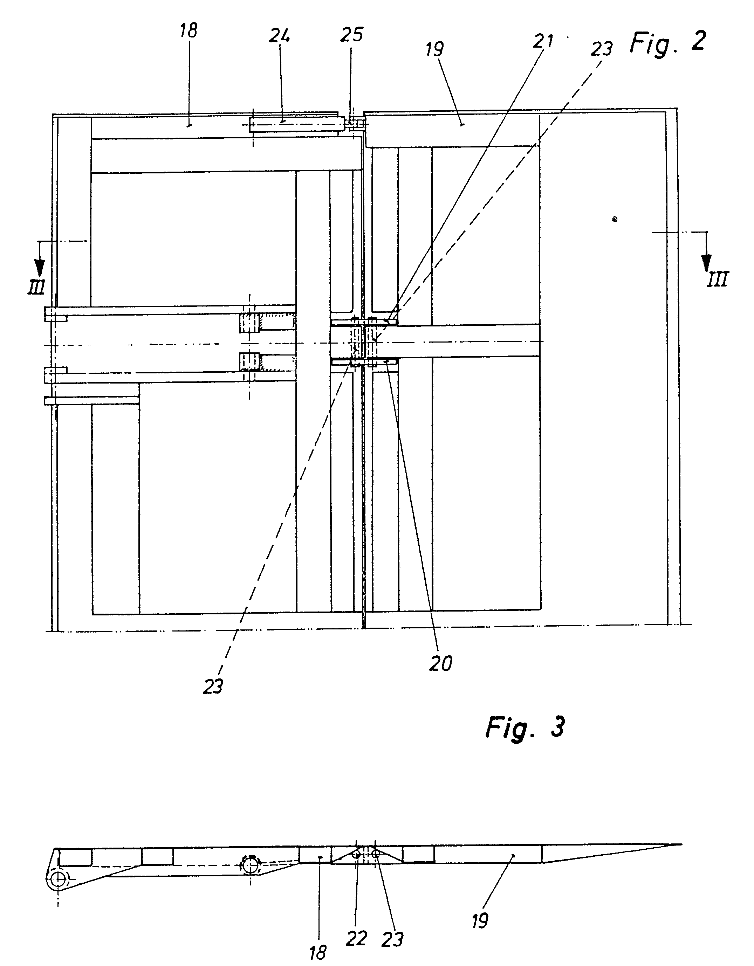

Nachstehend wird an Hand der Zeichnungen ein Ausführungsbeispiel der Erfindung näher beschrieben, ohne dass die Erfindung jedoch auf dieses Beispiel beschränkt wäre. Dabei zeigen: Fig. 1 in teilweise geschnittener Seitenansicht eine erfindungsgemäss ausgebildete Ladevorrichtung, Fig. 2 die Draufsicht auf eine Ladeplattform der Ladevorrichtung, Fig. 3 einen Schnitt nach der Linie III-III in Fig. 2 und Fig. 4 sowie Fig. 5 je ein Detail der Ladeplattform.

Gemäss Fig. 1 ist an der Unterseite der Ladefläche 1 eines Fahrzeuges zu beiden Seiten je ein Arm 2 drehbar gelagert. Die Anordnung der beiden Arme 2 und der damit verbundenen Lenkerparallelogramme ist spiegelbildlich gleich, so dass im folgenden nur die an einer Seite befindliche Anordnung beschrieben wird.

Die drehbare Lagerung des Armes 2 erfolgt über eine mit dem Arm verbundene Büchse 3 und eine mit dem Fahrzeug verbundene Achse 4.

Der Arm 2 ist als zweiarmiger Hebel ausgebildet, wobei an dem in der Zeichnung oberen Ende die Kolbenstange 5 eines hydraulischen Schubmotors angreift, dessen Zylinder 6 am Fahrzeug angelenkt ist. An der gegenüberliegenden Seite des Armes 2 sind an Achsen 10 und 11 Lenker 7 und 8 eines Lenkerparallelogrammes angelenkt, das zur Führung einer Ladeplattform 9 dient. Der Lenker 8 ist über die Achse 10 hinaus verlängert und am verlängerten Teil 12 greift die Kolbenstange 13 eines hydraulischen Schubmotors an, dessen Zylinder 14 am Arm 2 angelenkt ist.

Zur Verschwenkung der Ladeplattform 9 von der in Fig. 1 stark ausgezogenen waagrechten Lage, in der aus Platzgründen das äussere Ende nicht mehr gezeichnet ist, in die strichpunktiert gezeichnete Lage 9" ist in bekannter Weise ein hydraulischer Schubmotor vorgesehen, dessen Kolbenstange 15 an der Ladeplattform 9 und dessen Zylinder 16 am Verbindungslenker 17 der beiden Lenker 7 und 8 angelenkt ist.

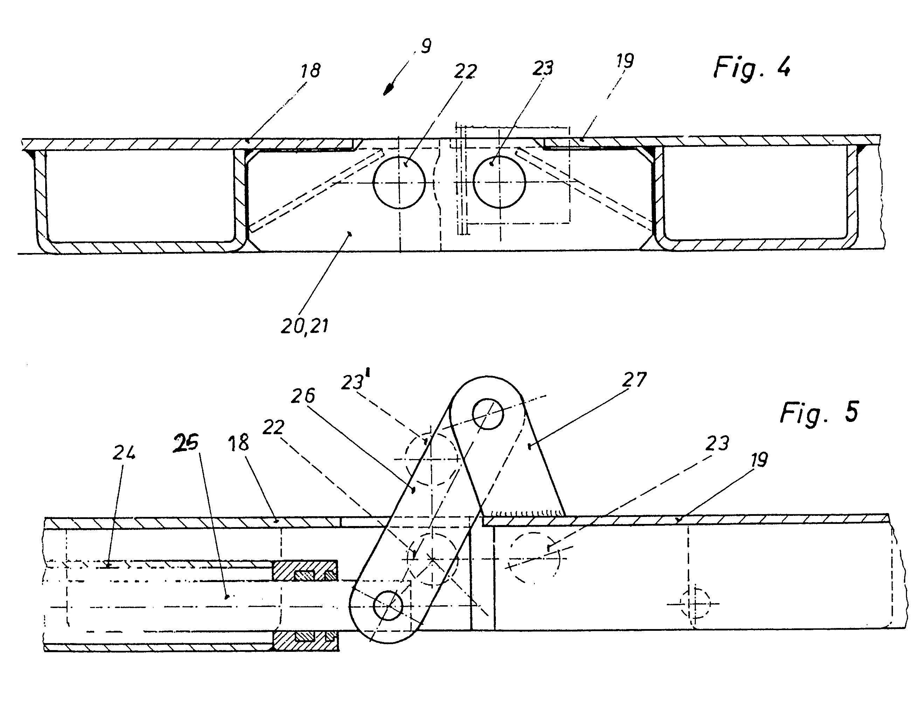

Die Ladeplattform 9 besitzt zwei klappbare Teile 18 und 19, deren Aufbau und Anordnung insbesondere aus den Fig. 2 bis 5 ersichtlich ist. In Fig. 2 ist dabei nur die eine Hälfte der Ladeplattform dargestellt. Die beiden Teile 18 und 19 sind nahe der Mitte jeder Hälfte über zwei Laschen 20 und 21 mit einander verbunden, die über einen Bolzen 22 am Teil 18 und einen Bolzen 23 am Teil 19 angelenkt sind. Wie insbesondere aus Fig. 4 ersichtlich ist, sind die Laschen 20 und 21 entsprechend der Form der Teile 18 und 19 ausgeschnitten und liegen im auseinandergeklappten Zustand der Ladeplattform 9 an deren Unterseite an.

An beiden Seiten der Ladeplattform 9 ist je ein hydraulischer Schubmotor vorgesehen, deren Zylinder 24 mit dem Teil 18 verbunden sind und deren Kolbenstangen 25 an je einer Lasche 26 angelenkt sind. Das den Kolbenstangen 25 gegenüberliegende Ende der Laschen ist an je einem gabelförmigen Ansatz 27 gelagert, die mit dem Teil 19 fest verbunden sind.

Soll die Ladeplattform zusammengeklappt werden, werden die Schubmotore 24, 25 mit Drucköl beaufschlagt, sodass die Kolbenstangen 25 ausfahren. Dabei wird auf die Laschen 26 und über diese auf den Teil 19 eine derartige Kraft ausgeübt, dass der Teil 19 vorerst um die Bolzen 22 und, nach einer Verschwenkung um annähernd 90°, um die Bolzen 23 verschwenkt. In Fig. 5 ist der Weg eines Bolzens 23 in seine verschwenkte Lage 23' eingezeichnet. Aus Fig. 1 ergibt sich die zusammengeklappte Stellung 9' der Ladeplattform.

Um die Ladevorrichtung nach dem Zusammenklappen der Ladeplattform 9 in ihre Stellung unter die Ladefläche 1 des Fahrzeuges zu verbringen, wird mittels des hydraulischen Schubmotors 15, 16 die Ladeplattform 9 in ihre herabhängende Stellung 9" (Fig. 1) gebracht. Anschliessend wird mittels des hydraulischen Schubmotors 5, 6 der Arm 2 im Uhrzeigersinn verschwenkt, sodass die Ladevorrichtung in ihre in Fig. 1 strichliert dargestellte Stellung unterhalb der Ladefläche 1 kommt.

Die Bewegung der Ladeplattform 9 zwischen dem Boden und der Ladefläche 1 des Fahrzeuges erfolgt in bekannter Weise mittels des hydraulischen Schubmotors 13, 14, der über den verlängerten Teil 12 des Lenkers 8 das Lenkerparallelogramm und damit die Ladeplattform verschwenkt.

Es sei darauf hingewiesen, dass die hydraulischen Schubmotore 15, 16 bzw. 13, 14 nur einfach wirkend ausgebildet zu sein brauchen, weil die Abwärtsbewegung der Ladeplattform bzw. des Lenkerparallelogrammes durch Schwerkraft erfolgen kann.

Im Rahmen der Erfindung sind zahlreiche Abänderungen möglich. So könnte z.B. statt des zur Verschwenkung des Armes 2 verwendeten hydraulischen Schubmotors 5, 6 auch ein Motor mit drehender Bewegung verwendet werden.

## Patentanspruch

1. Ladevorrichtung für Fahrzeuge mit einer Ladeplattform (9), die mittels eines von einem hydraulischen Schubmotor (13, 14) bewegbaren Lenkerparallelogrammes (7, 8) zwischen dem Boden und der Ladefläche (1) des Fahrzeuges heb- und senkbar ist, wobei unterhalb der Ladefläche (1) ein mit dem Lenkerparallelogramm (7, 8) verbundener, motorisch um eine quer zur Fahrzeuglängsrichtung angeordnete Achse (4) verschwenkbarer Arm (2) angeordnet ist, der zur Verschwenkung der Ladevorrichtung unter die Ladefläche (1) ausgebildet ist, und wobei der hydraulische Schubmotor (13, 14) einerseits am motorisch verschwenkbaren Arm (2) gelagert ist, dadurch gekennzeichnet, dass der hydraulische Schubmotor (13, 14) anderseits an einem Lenker (8) des Lenkerparallelogramms (7, 8) gelagert ist, und zur Verschwenkung des Armes (2) samt dem hydraulischen Schubmotor (13, 14) ein weiterer Motor (5, 6) angeordnet ist.

## Claim

1. A loading equipment for a vehicle, comprising a loading platform (9) which can be lifted and lowered between ground and the charging surface (1) of said vehicle by means of a parallelogram linkage (7, 8) moved by a hydraulic thrust motor (13, 14), a rotatable arm (2) arranged below said charging surface (1) and connected to said parallelogram linkage (7, 8) and motor-driven around an axis (4) transverse to the vehicle's longitudinal direction, said arm (2) being adapted to pivot said loading equipment beyond said charging surface (1), said hydraulic thrust motor (13, 14) being supported with one of its ends on said motor-driven pivotable arm (2), characterized by said hydraulic thrust motor (13, 14) being supported with its other end on a link (8) of said parallelogram linkage (7, 8) and by a further motor (5, 6) for rotating said arm (2) in unison with said hydraulic thrust motor (13, 14).

## Revendication

1. Le dispositif de chargement pour véhicules avec une plateforme de chargement (9) pouvant être levée et baissée entre le fond et la surface de chargement (1) du véhicule à l'aide d'un parallélogramme de conduite (7, 8) actionné par un moteur pousseur hydraulique (13, 14), un bras (2), exécuté pour déplacer le dispositif de chargement sous la surface de chargement (1), pivotable par moteur autour d'un axe (4) placé transversalement au sens longitudinal du véhicule, étant appliqué sous la surface de chargement (1) et relié avec le parallélogramme de conduite (7, 8) et le moteur pousseur hydraulique (13, 14) étant d'une part placé sur le bras (2) pivotable par moteur, est caractérisé par le fait que d'autre part le moteur pousseur hydraulique (13, 14) est placé sur un guide (8) du parallélogramme de conduite (7, 8) et que pour le déplacement du bras (2) avec le moteur pousseur hydraulique (13, 14) est appliqué un autre moteur (5, 6).

Fig. 1

18  24  25  19  21  23  *Fig. 2*

III

III

23

23

20

*Fig. 3*

18  22  23

19

7

*Fig. 4*

*Fig. 5*